# EUROPÄISCHE PATENTANMELDUNG

(11) **EP 2 301 698 A2**
(43) Veröffentlichungstag der Anmeldung: **30.03.2011**
(21) Anmeldenummer: 10168546.9
(22) Anmeldetag: 06.07.2010
(51) Int. Cl.: B23B 31/26

(54) **Spannvorrichtung mit stationärer Löseeinheit**

(30) Priorität: 25.09.2009 DE 102009044105
(71) Anmelder: Röhm GmbH, 89567 Sontheim/Brenz (DE)
(72) Erfinder: Hangleiter, Eugen, 89568, Hermaringen (DE)
(74) Vertreter: Hentrich, Swen

(57) **Zusammenfassung**

Eine Spannvorrichtung (100) umfasst: ein Spindelteil (1) mit Spannklauen (3), mit einer zu den Spannklauen (3) beweglich angeordneten Zugstange (4), mit einem beweglich ausgestalteten Mittelring (5), der zu einer Verschiebung der Zugstange (4) ausgestaltet und angeordnet ist, mit einem Abschlussring (6), durch das ein Stehbolzen (7) zu einer Verschiebung des beweglich ausgestalteten Mittelringes (5) von einer Feststellung der Spannklauen (3) in eine Lösestellung der Spannklauen (3) ausgestaltet und angeordnet ist, und mit einem Federelement (8), das zu einer Verschiebung des beweglich ausgestalteten Mittelringes (5) von der Lösestellung der Spannklauen (3) in die Feststellung der Spannklauen (3) ausgestaltet und angeordnet ist, und ein Stationärteil (2) mit einer stationären Löseeinheit, die einen zylinderförmigen Kolben (9) mit einer kreisringförmig ausgestalteten Anschlagfläche (10) aufweist, die einer Endfläche (13) des Stehbolzens (7) gegenüber liegend angeordnet ist.

## Beschreibung

Die vorliegende Erfindung betrifft Spannvorrichtungen mit stationärer Löseeinheit. Insbesondere betrifft sie pneumatische und hydraulische Spannvorrichtungen mit stationärer Löseeinheit.

Bei herkömmlichen Löseeinheiten für pneumatische und hydraulische Spannvorrichtungen ist es notwendig, die Zugstange in der Arbeitsspindel lang auszugestalten und eine komplizierte Anordnung der Löseeinheit vorzusehen.

Die Aufgabe der vorliegenden Erfindung liegt darin, die oben genannten Nachteile der herkömmlichen Spannvorrichtungen zu überwinden und eine Spannvorrichtung bereit zu stellen, bei der die Löseeinheit einfacher ausgestaltet und betrieben werden kann.

Bei einer Spannvorrichtung umfassend ein Spindelteil mit Spannklauen und einer zu den Spannklauen beweglich angeordneten Zugstange, wird diese Aufgabe dadurch gelöst, dass das Spindelteil ferner einen beweglich ausgestalteten Mittelring, der zu einer Verschiebung der Zugstange ausgestaltet und angeordnet ist, einen Abschlussring, durch das ein Stehbolzen zu einer Verschiebung des beweglich ausgestalteten Mittelringes von einer Feststellung der Spannklauen in eine Lösestellung der Spannklauen ausgestaltet und angeordnet ist, und ein Federelement aufweist, das zu einer Verschiebung des beweglich ausgestalteten Mittelringes von der Lösestellung der Spannklauen in die Feststellung der Spannklauen ausgestaltet und angeordnet ist, und dass die Spannvorrichtung ferner ein Stationärteil mit einer stationären Löseeinheit umfasst, die einen zylinderförmigen Kolben mit einer kreisringförmig ausgestalteten Anschlagfläche aufweist, die einer Endfläche des Stehbolzens gegenüber liegend angeordnet ist. Diese Ausgestaltung weist den Vorteil auf, dass die Zugstange eine nur kurze Länge aufzuweisen braucht. Ein weiterer Vorteil liegt darin, dass aufgrund der kreisringförmigen Anschlagfläche des zylinderförmigen Kolbens der Stehbolzen in jeder Rotationsstellung des Spindelteils beaufschlagt werden kann.

Bei der Spannvorrichtung hat es sich als vorteilhaft erwiesen, wenn der zylinderförmige Kolben ein umlaufendes Basisteil aufweist, bei dem ein erstes ringförmiges Gleit, Lager- und Dichtelement außenseitig und ein zweites ringförmiges Gleit, Lager- und Dichtelement innenseitig angeordnet sind, wodurch die Beweglichkeit und die Führung des zylinderförmigen Kolbens verbessert werden kann.

Weiterhin kann die Löseeinheit eine Feststellkammer, die zwischen dem umlaufenden Basisteil des zylinderförmigen Kolbens und einem dem Spindelteil gegenüber liegenden ringförmigen Abschlusselement des Stationärteils angeordnet ist, und eine Lösekammer aufweisen, die auf der der Feststellkammer gegenüber liegenden Seite des umlaufenden Basisteils des zylinderförmigen Kolbens angeordnet ist, und dass an dem ringförmigen Abschlusselement innenseitig drittes ringförmiges Gleit, Lager- und Dichtelement angeordnet ist.

Im Folgenden wird die Erfindung an einem in der Zeichnung dargestellten Ausführungsbeispiel näher erläutert; es zeigt:

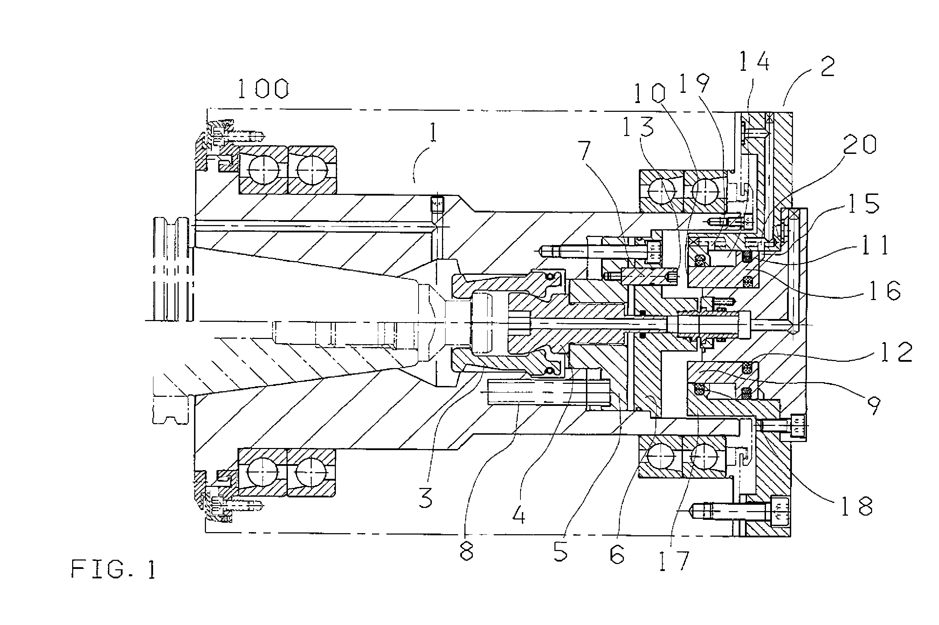

- Fig. 1: eine schematische Querschnittsdarstellung einer Spannvorrichtung mit stationärer Löseeinheit.

Die Fig. 1 zeigt eine schematische Querschnittsdarstellung einer Spannvorrichtung 100 mit einem Spindelteil 1 und einem Stationärteil 2. Das Spindelteil 1 umfasst: Spannklauen 3, eine zu den Spannklauen 3 beweglich angeordnete Zugstange 4, einen beweglich ausgestalteten Mittelring 5 zur Bewegung der Zugstange 4 und einen Abschlussring 6. Durch den Abschlussring 6 ist ein Stehbolzen 7 so angeordnet, dass durch Beaufschlagung seiner Endfläche 13 der beweglich ausgestaltete Mittelring 5 derart bewegt werden kann, dass über die Zugstange 4 die Spannklauen 3 von einer Feststellung der Spannklauen 3 in eine Lösestellung der Spannklauen 3 gebracht werden können. Weiterhin weist das Spindelteil 1 ein Federelement 8 auf, das dem Stehbolzen 7 entgegen wirkt.

Das Stationärteil 2 umfasst eine stationäre Löseeinheit mit einem zylinderförmigen Kolben 9, der eine kreisringförmig ausgestaltete Anschlagfläche 10 aufweist, die der Endfläche 13 des Stehbolzens 7 gegenüber liegend angeordnet ist. Der zylinderförmige Kolben 9 weist weiterhin ein umlaufendes Basisteil 16 auf, bei dem ein erstes ringförmiges Gleit, Lager- und Dichtelement 11 außenseitig und ein zweites ringförmiges Gleit, Lager- und Dichtelement 12 innenseitig angeordnet sind. Das Stationärteil 2 umfasst außerdem ein dem Spindelteil 1 gegenüber liegendes ringförmiges Abschlusselement 17 mit einem innenseitig angeordneten dritten ringförmigen Gleit, Lager- und Dichtelement 18. Wenn über eine zweite Zufuhrleitung 20 eine Lösekammer 15 beaufschlagt wird, wird der zylinderförmige Kolben 9 in eine Stellung gebracht, die eine Lösestellung der Spannklauen 3 bewirkt. Wenn über die erste Zufuhrleitung 19 die Feststellkammer 14 beaufschlagt wird, wird der zylinderförmige Kolben 9 in eine Stellung gebracht, bei der das Federelement 8 eine Feststellung der Spannklauen 3 bewirken kann.

### Bezugszeichenliste

- 1: Spindelteil
- 2: Stationärteil
- 3: Spannklauen
- 4: Zugstange
- 5: Mittelring
- 6: Abschlussring
- 7: Stehbolzen
- 8: Federelement
- 9: zylinderförmige Kolben
- 10: Anschlagfläche des zylinderförmigen Kolbens
- 11: erstes ringförmiges Gleit, Lager- und Dichtelement
- 12: zweites ringförmiges Gleit, Lager- und Dichtelement
- 13: Endfläche des ersten Federelements
- 14: Feststellkammer
- 15: Lösekammer
- 16: Basisteil
- 17: ringförmiges Abschlusselement
- 18: drittes ringförmiges Gleit, Lager- und Dichtelement
- 19: erste Zufuhrleitung
- 20: zweite Zufuhrleitung
- 100: Spannvorrichtung

## Patentansprüche

1. Spannvorrichtung (100) umfassend:
- ein Spindelteil (1) mit Spannklauen (3), mit einer zu den Spannklauen (3) beweglich angeordneten Zugstange (4), mit einem beweglich ausgestalteten Mittelring (5), der zu einer Verschiebung der Zugstange (4) ausgestaltet und angeordnet ist, mit einem Abschlussring (6), durch das ein Stehbolzen (7) zu einer Verschiebung des beweglich ausgestalteten Mittelringes (5) von einer Feststellung der Spannklauen (3) in eine Lösestellung der Spannklauen (3) ausgestaltet und angeordnet ist, und mit einem Federelement (8), das zu einer Verschiebung des beweglich ausgestalteten Mittelringes (5) von der Lösestellung der Spannklauen (3) in die Feststellung der Spannklauen (3) ausgestaltet und angeordnet ist, und
- ein Stationärteil (2) mit einer stationären Löseeinheit, die einen zylinderförmigen Kolben (9) mit einer kreisringförmig ausgestalteten Anschlagfläche (10) aufweist, die einer Endfläche (13) des Stehbolzens (7) gegenüber liegend angeordnet ist.

2. Spannvorrichtung (100) nach Anspruch 1, **dadurch gekennzeichnet, dass** der zylinderförmige Kolben (9) ein umlaufendes Basisteil (16) aufweist, bei dem ein erstes ringförmiges Gleit, Lager- und Dichtelement (11) außenseitig und ein zweites ringförmiges Gleit, Lager- und Dichtelement (12) innenseitig angeordnet sind.

3. Spannvorrichtung (100) nach Anspruch 2, **dadurch gekennzeichnet, dass** die Löseeinheit eine Feststellkammer (14), die zwischen dem umlaufenden Basisteil (16) des zylinderförmigen Kolbens (9) und einem dem Spindelteil 1 gegenüber liegenden ringförmigen Abschlusselement (17) des Stationärteils (2) angeordnet ist, und eine Lösekammer (15) aufweist, die auf der der Feststellkammer (14) gegenüber liegenden Seite des umlaufenden Basisteils (16) des zylinderförmigen Kolbens (9) angeordnet ist, und dass an dem ringförmigen Abschlusselement (17) innenseitig ein drittes ringförmiges Gleit, Lager- und Dichtelement (18) angeordnet ist.
